# EUROPEAN PATENT SPECIFICATION

(11) **EP 2 705 096 B1**
(45) Date of publication and mention of the grant of the patent: **06.04.2016**
(21) Application number: 12721461.7
(22) Date of filing: 04.05.2012
(51) Int. Cl.: C09D 11/102, C09D 11/30, C09D 11/36, C09D 11/00

(54) **BIODEGRADABLE LIQUID INK COMPOSITION FOR INK JET PRINTING**
FLÜSSIGE, BIOLOGISCH ABBAUBARE TINTENZUSAMMENSETZUNG FÜR TINTENSTRAHLDRUCK
COMPOSITION D'ENCRE LIQUIDE BIODÉGRADABLE POUR IMPRESSION À JET D'ENCRE

(30) Priority: 05.05.2011 FR 1153874; 27.07.2011 US 201161512184 P
(43) Date of publication of application: 12.03.2014
(73) Proprietor: Markem-Imaje Holding, 26500 Bourg-Les-Valence (FR)
(72) Inventor: DE SAINT-ROMAIN, Pierre, F-26000 Valence (FR)
(74) Representative: Ilgart, Jean-Christophe
(86) International application number: PCT/EP2012/058290
(87) International publication number: WO 2012/150349

(56) References cited:
- WO-A1-2010/055210
- JP-A- 8 319 445

## Description

### TECHNICAL FIELD

The invention concerns liquid ink compositions for marking supports, substrates and objects of all kinds, whose properties are particularly well adapted for the ink jet marking or printing of a large variety of supports, substrates and objects whether porous or non-porous, both using the so-called « continuous jet » technique and the so-called « drop on demand » technique. The ink compositions of the invention are defined as being biodegradable ink compositions and preferably the ink compositions of the invention are additionally compostable ink compositions.

By biodegradable composition, ingredients, constituents, components is generally meant that this composition, these ingredients, components, constituents are able to be degraded, broken down preferably rapidly, by living organisms such as micro-organisms without polluting the natural environment.

Biodegradation translates as progressive simplification of the chemical structure of an organic compound particularly comprising carbon, hydrogen, oxygen, nitrogen atoms, with the mineralization of carbon into carbon dioxide form and the obtaining of metabolites of low molecular weight.

According to the French Journal Officiel of April 12, 2009, « a substance is said to be biodegradable if, under the action of living organisms, it can be broken down into various elements devoid of harmful effects on the natural environment ».XX

More precisely, in the meaning of the present invention, an ink composition is biodegradable if the weight proportion of non-volatile matter of the ink composition which is biodegradable in accordance with standard ASTM D5338, or according to standard ISO 14855, relative to the total weight of non-volatile matters of the ink composition, is equal to or higher than 30% by weight, preferably equal to or higher than 50% by weight, more preferably equal to or higher than 60% by weight, further preferably equal to or higher than 90% by weight. By non-volatile matter of the ink composition is generally meant the dry extract after heating the composition at 90°C for 2 hours.

Similarly, in the meaning of the invention, a constituent of the ink such as a polymer or other is biodegradable if the weight proportion of this constituent which is biodegradable, as per standard ASTM D5338 or as per standard ISO 14855, relative to the total weight of this constituent, is equal to or higher than 30% by weight, preferably equal to or higher than 50% by weight, more preferably equal to or higher than 60% by weight, further preferably equal to or higher than 90% by weight.

Preferably the ink composition of the invention is also additionally compostable.

A compound or product such as a polymer which is compostable is necessarily biodegradable to a variable extent, for example 60% or more or 90% or more depending on standards. However a compound or product such as a polymer which is biodegradable is not necessarily compostable.

Indeed, for a compound or product such as a polymer to be compostable, it must additionally meet other requirements generally specified by compostability standards, namely, for example, the ability to disintegrate physically into particles of size smaller than a certain threshold within a given time, and the non-presence, absence of heavy metals and other toxic elements.

It is to be noted that regarding ink compositions for ink jet printing, such as the ink that is the subject hereof, and which are sprayed in drops, droplets smaller than 1 mm, the capacity for physical disintegration into particles is in principle automatically obtained.

Compostability is defined in several standards such as standards ASTM 6400, EN 13432 or DIN 54900.

In the meaning of the invention, an ink composition is generally meant to be compostable if it conforms to one of the above-cited standards.

According to these standards, for a product to be compostable, it must not contain any heavy metal, it must disintegrate into particles of size less than 2 mm in a composting test, and its biodegradability must be 60% or more (60% or higher biodegradation: standard ASTM 6400) or 90% or more (90% biodegradation or higher: standard EN 13432) within 180 days in an industrial compositing unit, and it must not be ecotoxic.

Biodegradability with a view to composting is defined by one of the methods ASTM D 5338 or ISO 14855 already mentioned above, and non-ecotoxicity is defined by methods OECD 207 and 208.

The man skilled in the art is also easily able to determine, in relation to laws and regulations in force or due to come into force, those compounds and the contents, amounts thereof which are considered to be biodegradable and optionally compostable.

On this account, the ink compositions of the invention are particularly suitable for marking biodegradable and optionally compostable products such as packaging or other single-use and disposable items.

Ink jet printing is a well-known technique which allows printing, marking or decoration of all kinds of objects at a high speed, rate, and without any contact of these objects with the printing device, with messages variable at will such as bar codes, sell-by dates etc. and this even on non-planar supports.

Ink jet printing systems can be divided into two major types: « Drop on Demand » type or « DOD » and. « Continuous Ink Jet » type or « CIJ ».

Projection with a deflected continuous ink jet by deflection consists of sending ink under pressure into a cavity containing a piezoelectric crystal, from which the ink escapes through an orifice (nozzle) in jet form. The piezoelectric crystal, vibrating at a determined frequency, causes pressure perturbations in the ink jet which oscillates and progressively breaks up into spherical drops or droplets. An electrode, called a charging electrode, placed on the pathway of the ink jet, at the point where it breaks up into spherical drops or droplets, allows an electrostatic charge to be imparted to these drops or droplets if the ink is conducting.

The pathway of the drops or droplets thus charged is deflected into an electric field.

When the drops or droplets can be charged at different potentials they can be used for printing, and this type of continuous jet is then called: multi-deflected continuous jet. In this case, the non-charged drops or droplets, and hence non-deflected, are recovered in a gutter from which the ink is sucked up and then recycled towards the ink circuit.

If, conversely, it is the non-charged drops or droplets which are used for printing and the charged drops or droplets which are recovered, the term used in binary continuous jet.

These continuous ink jet spraying techniques ensure high speed, contactless marking on objects that are not necessarily planar and with the possibility of changing messages at will.

These techniques are particularly suitable for marking and identifying industrial products on production lines (expiry dates, serial numbers, batch numbers, bar codes, etc.).

The described field of application requires varied ink formulations, adapted to the variety of substrates to be marked and meeting a wide variety of industrial constraints.

Jet propelling by « drop on demand » can be performed using so-called « bubble » jet or so-called « piezoelectric » jet. In the first case, the ink is vaporized in the vicinity of the nozzle, and this vaporization causes the ejection of the small quantity of ink located between the resistance which vaporizes the ink and the nozzle. In the second case, a sudden variation in pressure caused by an actuator set in movement by electric excitation of a crystal or of a piezoelectric ceramic positioned in the vicinity of the nozzle causes the ejection of an ink droplet.

The diameter of the nozzles for the DOD jet is of the order of 10 to a few tens of microns. For continuous jet, the diameter of the nozzles is larger, of the order of 30 to 100 microns.

The ink compositions capable of being projected sprayed by a jet must meet a certain number of criteria inherent in this technique, related *inter alia* to viscosity, solubility in a solvent for cleaning, compatibility of the ingredients, proper wetting of the supports to be marked, etc., and related to electric conductivity in the case of deflected continuous jet.

For all types of ink jet technologies the viscosity of the inks is very low, at the spraying temperature (generally 20°C), typically 1 to 20 mPa.s, and these technologies can therefore be qualified as deposit technologies of low viscosity ink.

In addition, these inks must dry quickly, must be able to flow or remain motionless in the vicinity of the nozzle without clogging it and must have very stable jet orientation, whilst allowing easy cleaning of the printing head.

These inks must be formulated and carefully filtered so that they do not contain any particles of a size likely to clog the nozzles. Filtering at thresholds between 0.2 and 1 µm is generally applied.

The ingredients, components, constituents, which make up current inks for the ink jet of the deflected continuous jet type, are organic or inorganic, mineral products; these are colouring materials, dyestuffs, such as dyes or pigments, resins or binders, in one or more solvent (s) that is (are) more or less volatile, or in water, and optionally one or more salt(s) providing conductivity, as well as various additives.

The ingredients, components, constituents which make up current inks for drop the ink jet of the on demand type (DOD) are also organic or inorganic, mineral products; dyes or pigments, resins or binders in one or more solvent (s) that is (are) more or less volatile, or in water, in proportions different from those of inks for deflected continuous ink jet but without the need for electric conductivity.

The colouring materials, dyestuffs, are called dyes or pigments depending on whether they are respectively soluble or insoluble in the solvent used.

Pigments, which are insoluble by nature, are therefore dispersed and may or may not be opaque. They impart colour and/or opacity, or particular optical properties such as fluorescence, to the ink.

Those pigments which do not contain any heavy metals, and are therefore neutral, for the environment include *inter alia* carbon black, titanium oxide, iron oxide, or lacquers i.e. colouring agents fixed, absorbed onto an insoluble support or substrate, for example onto alumina particles.

The binder(s) or resin(s) of inks intended for ink jet printing are generally, and for the most part, solid and polymeric compound(s) and their choice is dictated by their solubility in the chosen solvents, by their compatibility with the dyes and with the other additives, by their capacity to allow good electrostatic charging of the drops, but also and above all by the properties they impart to the ink film once it is dry.

Their primary function is to provide the ink with adherence to a maximum number of supports or to specific supports e.g. non-porous supports. They also impart adequate viscosity to the ink for the formation of drops from the jet, and they provide the ink or rather the obtained marking with the essential part of its properties of resistance to physical and/or chemical attacks such as resistance to friction and more generally to abrasion.

The additives comprise:
- plasticizers which soften the film of dry ink which can provide improved adherence and cohesion of the ink on the marked support,
- dispersants which allow dispersion of the pigments. Said dispersants stabilize the pigments via steric effect and/or via electrostatic effect depending on whether they are ionisable or not, and depending on the polarity of the solvent,
- agents inhibiting corrosion induced by some salts such as chlorides which provide conductivity (see documents EP-A-0 510 752, US-A-5,102,458),
- additives which protect the ink against proliferations of bacteria and other micro-organisms: these are biocides, bactericides, fungicides and others, particularly useful in water-containing inks,
- pH-regulating buffers (see EP-A-0 735 120),
- anti-foaming agents.

Ink jet inks for non-food use also comprise surfactants, surface active agents, which modify the wetting or penetration property of the ink (cf. patent US-A-5,395,431), in particular those which modify or regulate the static or dynamic surface tension such as Fluorad^{®} FC 430 manufactured by 3M. Said products regularize the impact size of the droplets.

With these surfactants, the impacts of the drops all have the same diameter irrespective of the type, cleanliness or evenness of the support. Biodegradable supports, substrates often have uneven surfaces in this respect. Yet the surfactants or surface active agents mentioned above are not and cannot be biodegradable and cannot therefore be applied on said substrates.

There is therefore a need for biodegradable inks which optionally and preferably are compostable, which provide markings of high quality and regularity, evenness, irrespective of the support, in particular if said support has an irregular, uneven surface, and preferably all without the use of any surfactant or tensioactive agent.

The additives, in the case of inks intended for deflected continuous ink jet printing, may also optionally comprise one or more conductivity salt(s).

The optional conductivity salt(s) provide the ink with the conductivity required for electrostatic deflection. In this respect reference may be made to document US-A-4,465,800. However it is to be noted that in some cases the dyes already impart sufficient conductivity to the ink, which means that there is no need to add a conductivity salt.

Among the salts providing conductivity, all kinds of species are used that are ionizable, soluble and dissociable in the solvent medium of the ink.

For inks in which the majority solvent is water, which is generally not the case with the compositions of the invention, providing conductivity to the ink does not usually pose any problem since most water-soluble products are ionizable species.

In some cases the dyes themselves also impart sufficient conductivity to the ink so that there is no need to add a conductivity salt.

The solvents which can be used in ink for ink jet are firstly, and generally in a majority amount, volatile, scarcely viscous solvents, in order to allow very rapid drying of the materials and adjust the viscosity to the desired value for example from 1 to 20 mPa.s, especially from 2 to 10 mPa.s, such as acetone, or ethanol; and secondly more viscous solvents that are less volatile with slower drying, in smaller amounts, such as propylene glycol.

One function of slower drying solvents may be to avoid drying of the ink in the nozzle during the stopping phases of the printing machine, thereby improving the quality of start-up after long stopping phases.

There is therefore a need for a rapid-drying ink having good start-up quality after long stopping phases.

More specifically, the volatile solvents most often used are alcohols, ketones or esters of low molecular weight, as mentioned in patents US-A-4,567,213 and US-A-5,637,139. Among these solvents, mention may especially be made of methanol, ethanol, 1- and 2-propanol, acetone, methyl ethyl ketone (« MEK »), and methyl isobutyl ketone.

Less volatile solvents which have specially a drying-retardant function are most often ketones such as cyclohexanone, glycol ethers cited in documents US-A-4,024,096 and US-A-4,567,213, ethers and acetals, such as furan or dioxane mentioned in document US-A-4,155,767, dimethyl formamide or dimethylsulfoxide (US-A-4,155,895), lactones (EP-A-0 034 881), N-methyl pyrrolidone (EP-A-0 735 120), glycols (WO-A-96 23 844), and even aliphatic hydrocarbons (US-A-4,166,044), in this respect reference may be made to documents US-A-4,153,593, GB-A-2 277 094 and FR-A-2 460 982.

Among these solvents, the man skilled in the art can easily determine those which solubilise the dryes, binders and other necessary ingredients. In general, the main or majority solvents of inks for ink jet printing, by a continuous deflected ink jet printing, must meet a certain number of criteria, in particular:
- their volatility must be sufficient so that the ink dries rapidly on the support to be marked, but not too high so that it does not evaporate too quickly in the printer, in particular during periods of non-use (stopping phases);
- their solvating power with respect to the binders, dyes or pigment dispersions of the ink and with respect to the supports to be printed, must allow the imparting of good adherence to the dry ink;
- the majority or main solvents (and also the minority solvents to a lesser extent), if the ink is intended for deflected continuous ink jet printing, must be capable of maintaining the ionic species, such as the salts, which impart electric conductivity to the ink, dissociated.

Finally, the solvents for biodegradable and optionally and preferably compostable inks do not necessarily need to be solvents that are biodegradable, for example in the soil, if they are fully evaporated.

In addition, the inks intended for ink jet projection spraying also include food inks.

These food inks contain natural dyes of plant or animal origin which by nature are intrinsically biodegradable, but they also contain dyes of synthetic origin which are not necessarily biodegradable.

The binders used heretofore in the non-aqueous media of non-food inks are mostly synthetic resins which are chemically very stable and hence are non-biodegradable.

It follows from the above that there is a need as yet non-fulfilled for a biodegradable ink which optionally and preferably is compostable, able to be sprayed by ink jet whose composition is able to meet regulatory requirements and standards laid down for biodegradability, and optionally compostability, in the largest number of countries.

There is also a need for an ink suitable in particular for ink jet printing by deflected continuous ink jet, which allows the rapid marking of all types of biodegradable objects that are optionally and preferably compostable, having different surface characteristics, whether porous or non-porous.

In addition, the ink must provide marking which has good adherence and good resistance to chemical attacks, in particular it must provide water-resistant marking and have all the properties usually required of inks for ink jet printers, in particular for inks used in printers using continuous jet technology, such as viscosity, resistivity, etc. The ink must have both the property of drying rapidly and of not clogging the nozzles, and thereby allow rapid start-up even after long stopping phases.

The ink must additionally allow high speed marking of objects of all kinds even of low-porosity, providing at all times printing or marking of excellent quality and evenness.

It is therefore the goal of the invention to provide a biodegradable ink that is optionally and preferably compostable, suitable for ink jet printing, in particular but not solely for deflected continuous ink jet printing, which *inter alia* meets all the above-indicated needs, which fulfils the criteria and requirements mentioned above, and which does not have the shortcomings, limitations, defects and disadvantages of prior art ink compositions, and which remedies the problems of the prior art ink compositions related in particular to the type of binder.

This goal, and still others, are achieved according to the invention by a biodegradable ink composition for ink jet printing, that is liquid at room, ambient temperature, comprising:
a) a binder comprising at least 0.5% by weight, relative to the total weight of the ink, of at least one biodegradable polymer having a weight average molecular weight of less than 70 kDa, preferably less than 60 kDa, more preferably less than 50 kDa, further preferably less than 40 kDa, expressed as polystyrene equivalents;
b) an organic vehicle (carrier) or solvent comprising, preferably consisting of, composed of, one or more organic solvent compound(s), and optionally water;
c) at least 0.1% by weight relative to the total weight of the ink composition of one or more dye(s) and/or pigment(s);
wherein the biodegradable polymer is chosen from among polyhydroxyalkanoates (PHA), polyesteramides (PEA), poly(glycolic acid)s, poly(lactic acid)s,(PLA), polycaprolactones (PCL), and the copolymers thereof; and aliphatic copolyesters such as succinates, adipates, and terephtalates; and wherein the ink composition has a viscosity of 1 to 20 mPa.s, preferably of 2 to 10 mPa.s at 20°C.

It is specified that the aliphatic copolyesters are copolymers of diacids such as sucinnic, adipic or terephtalic acid with diols. These are copolymers different from PHAs which are polymers prepared from monomers containing both an acid function and an alcohol function.

The polyhydroxyalkanoates comprise homopolymers such as poly (3-hydroxybutyrate) (P3HB) and poly (3-hydroxyvalerate) (PHV) and copolymers such as poly (3-hydroxybutyrate-co-3-hydroxyvalerate) (PHBV).

These polymers are recognized as being biodegradable as is indicated in particular in the book « Compostable polymer materials » by Ewa Rudnik, Elsevier Ed. (December 2007).

By ambient, room, temperature is generally meant a temperature from 5°C to 30°C, preferably from 10°C to 25°C, more preferably from 15°C to 24°C, further preferably from 20°C to 23°C. Evidently, the ink is liquid at atmospheric pressure.

The ink of the invention is a specific ink for ink jet printing, by drop on demand or deflected continuous ink jet, especially, but not only, of biodegradable products that are optionally and preferably compostable, which basically contains a biodegradable, and preferably compostable, binder in specific proportions, and which is liquid at ambient room temperature.

This binder comprises a biodegradable polymer of specific molecular weight and chosen from among specific polymers.

In other words, the ink composition of the invention differs fundamentally from ink compositions of the prior art in that it is specifically an ink composition for ink jet printing, in that it contains at least one biodegradable binder that is optionally and preferably compostable, and in that it is a biodegradable ink composition that is optionally and preferably compostable.

The ink composition of the invention may also comprise binders other than the biodegradable binder(s) in order to improve the properties thereof.

No prior art document describes an ink having all the specific characteristics of the composition according to the invention.

For example, document US-A-5,713,991 describes an ink for ink jet printing containing a biodegradable polymer linked to a solubilising group of a water-soluble dye by coordination bonding.

The biodegradable polymer can be chosen from among the organic acid salts of cationic chitosans, e.g. chitosan acetate, cationic starches, vinylbenzyl type cationic polymers, acrylic acid type cationic polymers, polyamine-sulfones and polyarylamines.

The inks of the examples of this document contain chitosan acetate or cationic starch as biodegradable polymer.

This document pertains to water-based compositions and all the examples of this document comprise at least 67% by weight of water.

Document EP-A-1 470 199 (WO-A1-03/062334) relates to essentially water-based biodegradable inks for flexography printing in which the biodegradable binders are in a dispersed form in an aqueous medium, namely in the form of suspensions in water of latex type.

There is no mention anywhere in this document indicating that the inks described therein can be projected by an ink jet.

The physical properties of inks for printing by flexography, such as viscosity and conductivity, are fundamentally different from those of inks that can be projected by an ink jet, which means that the man skilled in the art would in no way be prompted to use an ink composition for flexography printing in an ink jet printing process.

In other words, the fact that an ink composition is suitable for flexography printing does not in any way mean that this ink composition may be suitable for ink jet printing.

Document JP-A-8092518, (published on 09.04.1996) relates to biodegradable inks essentially for flexography printing and comprising a biodegradable polyester, containing 80 to 100 moles lactic acid units having a 1 to 9 molar ratio of the L-lactic acid units to the D-lactic acid units; a pigment; and a solvent. The biodegradable polyester may comprise units of a hydroxy acid other than lactic acid, of succinic acid, of propylene glycol or of glycerol. No detail is given on the molecular weight of the biodegradable polyester.

No mention is made in this document indicating that the inks described therein can be projected by an ink jet.

Again, the physical properties of inks for flexography printing, such as viscosity and conductivity, are fundamentally different from those of inks projected by an ink jet, and as a result the man skilled in the art would in no way envisage the use of an ink composition for flexography printing in an ink jet printing process.

In other words, the fact that an ink composition is suitable for printing by flexography does not at all mean that this ink composition may be suitable for ink jet printing.

Similarly, document JP-A-8319445 describes biodegradable inks essentially for serigraphy in which the biodegradable binder is a poly (lactic acid), a polycaprolactone, or a poly (vinyl alcohol).

It should be noted that, in this document, there is no reference to the number average molecular weight or to the weight average molecular weight.

It is specified that the preferred molecular weight range for the poly (lactic acid) is 80,000 to 120,000 Da, while the biodegradable polymer used in the ink composition according to the invention has a weight average molecular weight of less than 70 kDa, preferably less than 60 kDa, also preferably less than 50 kDa, better still less than 40 kDa, expressed in polystyrene equivalents.

The inks of this Japanese document are unsuitable for inkjet spraying, and in particular have a much higher viscosity than that of the ink compositions according to the invention.

Thus, the inks of paragraphs [0049] to [0052] of this Japanese document, which contain 20 parts by weight of a poly (lactic acid) (PLA) as binder resin and 61.5 parts by weight of a Methylethylketone (MEK): toluene 1/1 mixture as solvent, have a viscosity much higher than the viscosity of the ink compositions according to the invention, and much higher than anything that may be sprayable by jet.

In fact, if only the solution of PLA in the MEK/toluene solvent is considered, its PLA content is 24.5% by weight of the total weight of the binder and the solvent, and such a solution already has a viscosity much higher than the viscosity of the ink compositions according to the invention and much higher than anything that may be sprayable by inkjet. The other ingredients of the inks of this Japanese document can only further increase the viscosity.

In fact, a solution at 24.5 by weight, in MEK only, of the PLA (weight average molecular weight 37 kDa) used in the examples according to the invention would have a viscosity of 30 mPa.s. With a solvent made up of a mixture of MEK and toluene, the viscosity of the solution would be even higher, and with a PLA having a higher molecular weight such as the one used in the Japanese document, the viscosity would be still further increased.

There is also no mention in this document that the compositions described therein may be sprayable by inkjet.

Once again, the physical properties of inks for printing by serigraphy differ fundamentally from those of inks which can be projected, sprayed by an ink jet, which means that those skilled in the art would in no way envisage using an ink composition intended for serigraphy in a printing process using ink jet.

In other words, the fact that an ink composition is suitable for serigraphy printing in no way means that this ink composition could be suitable for ink jet printing.

Document JP-A-2002-356640 pertains to conventional printing inks for photo-engraving (photogravure) which are not inks for ink jet printing, which comprise an aliphatic polyester, an ink pigment and a solvent. The aliphatic polyester comprises poly(lactic acid) segments to a proportion of 80% moles or higher, the molar ratio of L-lactic acid residues to D-lactic acid residues being 1 to 9, and polyglycerol segments.

Again, there is no mention in this document indicating that the inks described therein may be used for inkjet printing, but only for « rotogravure ».

Once again, the physical properties of inks for printing by rotogravure differ fundamentally from those of inks projected by inkjet, and as a result the man skilled in the art would in no way envisage the use of an ink composition for rotogravure printing in a process for ink jet printing.

In other words, the fact that an ink composition is suitable for printing by rotogravure in no way means that this ink composition may be suitable for ink jet printing.

It is known that polymers which can be used in ink formulations for conventional applications such as photo-engraving, flexography or screen printing are not necessarily able to be projected by an inkjet.

The fact that a polymer, in particular a biodegradable polymer, has been used as binder in ink formulations for conventional applications such as photo-engraving, flexography or screen printing in no way means that this polymer may be suitable for use in a composition for ink jet printing.

In other words, it cannot absolutely be inferred from the fact that a polymer has been successfully used in an ink composition for photo-engraving, flexography or screen printing that this same polymer could also be successfully used in an ink composition for ink jet printing.

Polymers with a molecular weight of the order of 70000 Da are unsuitable for continuous ink jet printing since with these polymers it is impossible to separate the ink jet into well divided drops or droplets able to be electrically charged.

The incorporation of a binder of polyhydroxyalkanoate, aliphatic copolyester, polyesteramide, poly(glycolic acid), poly(lactic acid), polycaprolactone and copolymers thereof type, in the specific proportions mentioned above and with the specific molecular weight mentioned above, in ink compositions for ink jet printing, in particular in ink compositions for deflected continuous ink jet printing, is therefore neither described nor suggested in the prior art.

The ink composition according to the invention fulfils all the above-mentioned needs, meets all the criteria and requirements listed above and allows the formulation of biodegradable, preferably compostable inks.

Unexpectedly, it has been found that the afore-mentioned polymers having the afore-mentioned molecular weight, and in particular certain commercially available grades and qualities of these polymers such as those cited in the examples, are suitable for ink jet printing.

The compositions of the invention give marking of high quality and regularity, evenness on any substrate.

Advantageously, the biodegradable polymer is a compostable polymer, and the ink composition of the invention is a compostable composition.

The definition of a compostable composition in the meaning of the invention is given above.

On this account, and advantageously, the composition of the invention does not contain heavy metals.

The term « heavy metals » is a term well-known to the man skilled in the art in this technical field.

Heavy metals for example include mercury, lead and cadmium.

The composition of the invention does not contain any heavy metals in that the heavy metal content of the composition of the invention is generally lower than 100 ppm, even having a value of 0.

Also on this account and advantageously the composition of the invention does not contain any ecotoxic constituents, components.

Advantageously, the ink composition comprises at least 2% by weight, preferably at least 4% by weight, more preferably at least 6% by weight relative to the total weight of the ink composition, of said at least one biodegradable, and preferably compostable, polymer.

Advantageously, the ink composition comprises 0.5 to 25% by weight, preferably from 1 to 20% by weigh, more preferably from 4 to 15% by weight, further preferably from 6 to 10% by weight relative to the total weight of the ink composition, of said at least one biodegradable, and preferably compostable, polymer.

Advantageously, said poly(lactic acid) is chosen from among amorphous poly(lactic acid)s whose weight average molecular weight is less than 60 kDa, preferably less than 50 kDa, more preferably less than 40 kDa, expressed as polystyrene equivalents.

Advantageously, said polycaprolactone is chosen from among polycaprolactones whose weight average molecular weight is less than 60 kDa, preferably less than 50 kDa, more preferably less than 40 kDa, expressed as polystyrene equivalents.

In the composition of the invention, the solvent or vehicle generally represents at least 10% by weight of the total weight of the ink composition, preferably from 30% to 90% by weight, more preferably from 60% to 80% by weight, of the total weight of the ink composition.

The solvent comprises one or more organic solvent compound(s) and optionally water.

Preferably, the ink composition according to the invention contains a very small amount of water, generally less than 10% by weight, preferably less than 5%, more preferably less than 1% by weight relative to the total weight of the ink.

The ink composition of the invention can even be considered as being essentially water-free (0% water).

In fact, the water present is only water through addition existing as an impurity in the various components of the ink. The higher the degree of purity of the selected components, the lower the water content.

The low content or absence of water in the ink composition of the invention promotes the forming of the ink film when the binders and other colouring materials of the composition are water-insoluble, thereby improving the resistance and adherence properties of the ink.

Said organic solvent compounds are known to the man skilled in the art in the technical field, and can be easily identified among the solvent compounds used in ink compositions for ink jet printing.

Preferably, the solvent compound(s) have the property of dissolving the other ink ingredients, in particular the binder, the colouring materials, the additives, etc.

Preferably, said organic solvent compound(s) forming part of the solvent is (are) also chosen from among biodegradable, and preferably compostable, solvent compounds.

Said organic solvent compound(s) may be chosen from among ketones, alcohols, alkyl esters, glycol ethers, acetals, ethyl lactate, methyl lactate, ethyl acetate, and mixtures thereof.

Examples of these organic solvent compounds are ethanol, propylene glycol methyl ether, ethyl lactate, ethyl acetate, isopropanol, acetic acid, methylethylketone, methylisobutylketone and mixtures thereof. Some of the solvents constituting the solvent of the ink may be used alone and others may not.

Ethanol may or may not be denatured, with different products in accordance with regulations in force in the country of use.

The vehicle or solvent generally comprises a major proportion by weight (50% by weight of the total weight of the solvent or more) of one or more ketone(s), this or these ketone(s) preferably being chosen from among acetone, butanone (methyl ethyl ketone), 2-pentanone (methyl propyl ketone), 3-methyl-2-butanone (methyl isopropyl ketone) and 4-methyl-2-pentanone (methyl isobutyl ketone); preferably the solvent is composed of one or more ketone(s) preferably chosen from among the above-cited ketones.

One preferred solvent from among all is composed (100%) of methyl ethyl ketone (MEK).

One or more organic solvent compound(s) other than the ketone (s) such as MEK, may be added to a minority weight proportion (less than 50% by weight), preferably 5 to 25% by weight relative to the total weight of the vehicle, in order to optimize the properties of the inks. These minority solvents may be chosen from among esters, ethylene glycol or propylene glycol ethers, and acetals.

The ink composition of the invention comprises one (or more) dye(s) and/or pigment(s).

Dyes and pigments have already been mentioned in the foregoing.

Advantageously, the dye(s) and/or pigment(s) is/are chosen from among biodegradable, and preferably compostable, dyes and/or pigments, not containing any heavy metals, and non-ecotoxic.

The term "ecotoxic" is widely used and has a well-known meaning. It generally means toxic, harmful to the environment or a specific ecosystem, for example toxic to aquatic organisms.

Pigments also include lacquers.

Advantageously, the dye(s) is/are chosen from among organic dyes soluble in ketones (at room, ambient temperature for example at 20°C).

Advantageously, the pigment(s) is/are chosen from among carbon black, titanium oxides and mixtures thereof.

The total amount of dye(s) and/or pigment(s) is generally from 0.05 to 25% by weight, preferably from 1 to 20%, more preferably from 3 to 10% by weight of the total weight of the composition.

The composition of the invention can be in the form of a dispersion of particles of at least one pigment in the solvent or vehicle of the ink composition. The pigment is preferably a white pigment such as titanium dioxide. In said dispersion, preferably 100% of the particles have a size of less than 0.5 µm as determined by quasi-elastic light scattering.

The binder of the composition of the ink invention may consist solely of one or more biodegradable, and preferably compostable, polymer(s).

Or else, the binder of the ink composition of the invention may further comprise, in addition to the at least one biodegradable, and preferably compostable, polymer in a major proportion (i.e. more than 50%) by weight relative to the total weight of the binder , one or more non-biodegradable and non-compostable polymer(s) and/or resin(s).

Said non-biodegradable and non-compostable polymer(s) and resin(s) are known to the man skilled in the art in this technical field, and can be easily identified among the polymers and resins used in ink compositions for ink jet printing.

Said polymers and resins have already been mentioned in the foregoing.

The proportion of binder in the ink composition of the invention is generally from 0.1 to 30% by weight, preferably from 1 to 25% by weight, more preferably from 3 to 20% by weight, of the total weight of the ink composition.

In particular, if the substrate to be marked is flexible, the ink composition may additionally comprise one or more plasticizer(s) to improve the adherence thereof. These plasticizers are preferably chosen from among biodegradable and compostable plasticizers.

The plasticizer(s) for example is/are chosen from among glycerol, lactic acid, oleic acid, polypropylene glycol, fatty acid triglycerides, the citrates and esters of citric acid, levulinic acid; and mixtures thereof.

The plasticizer(s) is/are generally present to the proportion of at least 0.05% by weight, preferably to the proportion of 0.1 to 20% by weight, relative to the total weight of the ink composition.

The composition of the invention, if it is to be propelled, sprayed by deflected continuous jet, may further comprise, generally, at least one conductivity salt except if another ingredient such as a dye, a pigment or any other ingredient is itself a salt able to provide conductivity when it is dissociated.

Indeed, the ink of the invention, if it is to be applicable by deflected continuous jet, must effectively have sufficient electric conductivity in the liquid state, generally higher than 5 µS/cm at 20°C, preferably higher than or equal to 300 µS/cm at 20°C, more preferably higher than or equal to 500 µS/cm at 20°C.

The conductivity of the ink composition according to the invention may thus for example be from 5 to 5,000 µS/cm, in particular from 500 to 2,000 µS/cm (at 20°C).

The conductivity is generally measured at 20°C with a laboratory conductivity meter such as the CDM210 conductivity meter model from the company Radiometer Analytical.

Therefore, if it is necessary to include in the ink composition at least one conductivity salt different from the dyes and other compounds able to be dissociated, this conductivity salt is preferably chosen from among salts which are not ecotoxic. The man skilled in the art may easily identify, from among the conductivity salts used for ink jet printing, those that do not have any ecotoxic effects.

Said at least one conductivity salt is therefore present, if needed, in the ink composition in order to impart the above conductivity to the ink: the amount thereof is generally at least 0.05% by weight, preferably their quantity is 0.1 to 20% by weight, more preferably from 0.1 to 10% by weight, further preferably from 0.1 to 5% by weight of the total weight of the ink composition.

The composition of the invention may further comprise one or more additive(s) chosen from among those compounds which improve the solubility of some of its components, the printing quality, the adherence, or further the controlled wetting of the ink on different supports.

The additive(s) for example may be chosen from among anti-foaming agents, chemical stabilizers, surfactants, bactericides, fungicides, biocides, and pH regulating buffers, etc.

Among the biocide additives, mention may be made for example of methyl, ethyl, propyl or butyl benzoates, sorbates, and parahydroxybenzoates.

Advantageously all these additives are chosen from among biodegradable, and preferably compostable, additives. It is to be noted that the additive(s) is/are used at very low doses, generally equal to or less than 5% and at times as low as 0.01% depending on whether these are anti-foaming agents, stabilizers or surfactants.

The invention further relates to a method for marking a substrate, object or support by projecting an ink onto this substrate, object or support using an ink jet printing technique in which the projected ink is an ink composition as described above.

Marking is performed using the ink jet printing technique, either the so-called « deflected continuous ink jet » or the so-called « drop on demand » technique.

The invention also relates to a substrate, object or support, for example porous or non-porous, provided with a marking obtained by drying and/or absorption (in the substrate, object or support) of the ink composition such as described above.

On account of the fundamentally biodegradable and preferably compostable nature of the ink composition of the invention, it is particularly suitable for the direct marking of all substrates, objects and supports that are biodegradable and preferably compostable.

Said substrate, object, support can therefore be chosen from among disposable packaging, bags, films, beakers, pots, plates, trays, dishes, cutlery, hostess set, clips, food-container bases, ash-trays, etc.

Marking, prints of excellent quality are obtained on all substrates, even scarcely porous substrates and even on substrates having a very uneven surface.

The invention will be better understood on reading the following description of embodiments of the invention, given as illustrative and non-limiting examples.

### EXAMPLES

The following ink compositions of the invention were prepared by mixing the products mentioned in Table I below following the indicated proportions. The viscosity and conductivity values of the inks obtained are also given below.

**TABLE I**

| Examples (weight percentages) | **1** | **2** | **3** | **4** | **5** |
|---|---|---|---|---|---|
| Methyl ethyl ketone | 246 | 240 | 260 | 315.5 | 237.6 |
| Polycaprolactone ⁽¹⁾ | | 42 | | | |
| Poly (lactic acid) ⁽²⁾ | 36 | | 34 | 36.46 | 32.4 |
| Special Carbon Black 4A | | | 12 | | |
| Titanium oxide, Kronos 2064 | | | | 22.5 | |
| Solsperse 34750 ⁽³⁾ | | | 2.4 | | |
| C.I. Solvent Black 29 | 15 | 15 | | | |
| Nigrosine A liquid 01 ⁽⁴⁾ | | | | | 29 |
| Bu₄NPF₆ | | | 2.6 | 1.73 | 1 |
| Viscosity (mPa.s) | 4.4 | 4.0 | 4.43 | 4.5 | 4.42 |
| Conductivity (µS/cm) | 660 | 820 | 898 | 650 | 998 |
| Particle size (Z-Average) ⁽⁵⁾ | N.A. | N.A. | 140 nm | 315 nm | N.A. |

| | | | | | |
|---|---|---|---|---|---|
| ⁽¹⁾ CAPA 6100 produced by Perstorp Specialty Chemicals^{®} with a weight average molecular weight of 30 kDa determined by size exclusion chromatography (GPC) in THF compared with Polystyrene standards; ⁽²⁾ Vyloecol BE410 P^{®} produced by Toyobo^{®} (Japon) with a weight average molecular weight of 37 kDa determined by size exclusion chromatography (GPC) in THF in a « Mixed D »^{®} column manufactured by Polymer Laboratories^{®}, and compared with Polystyrene standards; ⁽³⁾ Dispersant produced by Lubrizol^{®}; ⁽⁴⁾ Dye in solution produced by Lanxess^{®}; ⁽⁵⁾ Particle sizes (Z Average) are measured by quasi-elastic light scattering in methyl ethyl ketone, using a Nano-S^{®} apparatus manufactured by Malvern^{®}. ⁽⁶⁾ The viscosities are measured with a Lew-Shear 30 coaxial cylinders viscometer from the company Contraves (Switzerland) at 20°C and the conductivities are measured at ambient, room, temperature, generally 20°C, with a CDM210 model conductivity meter by the company Radiometer Analytical. | | | | | |

The inks in Examples 1, 2, and 5 were prepared by simple mixing of the different ingredients under agitation.

In these examples, the biodegradable and compostable fraction of the solids is greater than 70%.

This fraction was simply determined by the ratio of the ingredients known to be biodegradable.

By comparison, an ink manufactured with CAPA 6250 polycaprolactone in lieu and stead of CAPA 6100 in Example 2, is not suitable for deflected continuous inkjet printing.

Indeed, the weight average molecular weight of this CAPA 6250 polycaprolactone measured by GPC was 70400 Da.

The inks in Examples 3 and 4 were prepared by grinding the pigments in a solution of polylactic acid in methyl ethyl ketone. In these examples, the biodegradable, and compostable fraction of the solids was higher than 60%.

After filtering through a filter of absolute porosity 2 µm, each of the Examples yielded an ink which could be sprayed by inkjet in Imaje printers of type Jaime^{®} 1000 series 8, and allowed printing of excellent quality to be obtained.

## Claims

1. Biodegradable ink composition for ink jet printing, liquid at room temperature, comprising:
a) a binder comprising at least 0.5% by weight relative to the total weight of the ink, of at least one biodegradable polymer having a weight average molecular weight of less than 70 kDa, preferably less than 60 kDa, more preferably less than 50 kDa, further preferably less than 40 kDa, expressed as polystyrene equivalents;
b) an organic vehicle or solvent comprising, preferably consisting of, one or more organic solvent compound(s), and optionally water; preferably said solvent or vehicle represents at least 10% by weight, preferably from 30 to 90% by weight, more preferably from 60 to 80% by weight, of the total weight of the ink composition;
c) at least 0.1% by weight relative to the total weight of the ink composition of one or more dye(s), and/or pigment(s);
wherein the biodegradable polymer is chosen from among polyhydroxyalkanoates (PHA), polyesteramides (PEA), poly (glycolic acid) s, poly (lactic acid) s (PLA), polycaprolactones (PCL), and the copolymers thereof; and aliphatic copolyesters such as succinates, adipates, and terephtalates; and wherein the ink composition has a viscosity of 1 to 20 mPa.s, preferably of 2 to 10 mPa.s at 20°C.

2. The ink composition according to claim 1, wherein said biodegradable polymer is a compostable polymer and the composition is a compostable composition.

3. The ink composition according to any one of the preceding claims, wherein the ink composition comprises at least 2% by weight, preferably at least 4% by weight, more preferably at least 6% by weight, relative to the total weight of the ink composition, of said at least one biodegradable, and preferably compostable, polymer.

4. The ink composition according to any one of the preceding claims, wherein the ink composition comprises from 0.5 to 25% by weight, preferably from 1 to 20% by weight, more preferably from 4 to 15% by weight, further preferably from 6 to 10% by weight, relative to the total weight of the ink composition, of said at least one biodegradable, and preferably compostable, polymer.

5. The ink composition according to any one of the preceding claims, wherein said poly(lactic acid) is chosen from among amorphous poly(lactic acid)s whose weight average molecular weight is less than 60 kDa, preferably less than 50 kDa, more preferably less than 40 kDa, expressed as polystyrene equivalents; and wherein said polycaprolactone is chosen from among polycaprolactones whose weight average molecular weight is less than 60 kDa, preferably less than 50 kDa, more preferably less than 40 kDa, expressed as polystyrene equivalents.

6. The ink composition according to any one of the preceding claims, wherein said organic solvent compound(s) of the solvent is/are chosen from among biodegradable, and preferably compostable, solvent compounds.

7. The ink composition according to any one of the preceding claims, wherein said organic solvent compound(s) is/are chosen from among ketones, alcohols, alkyl esters, glycol ethers, acetals, ethyl lactate, methyl lactate, ethyl acetate, and mixtures thereof.

8. The ink composition according to claim 7, wherein the vehicle of the ink composition contains a major proportion by weight of one or more ketone(s).

9. The ink composition according to any one of the preceding claims, wherein the dye(s) and/or pigment(s) is/are chosen from among biodegradable, and preferably compostable dyes and/or pigments, not containing heavy metals, and non-ecotoxic.

10. The ink composition according to any one of the preceding claims, wherein the dye(s) is/are chosen from among organic dyes soluble in ketones.

11. The ink composition according to any one of the preceding claims, wherein the pigment(s) is/are chosen from among carbon black, titanium oxides such as titanium dioxide and mixtures thereof.

12. The ink composition according to any one of the preceding claims wherein the total amount of dye(s) and/or pigment(s) is from 0.05 to 25% by weight, preferably from 1 to 20% by weight, more preferably from 3 to 10% by weight, of the total weight of the ink composition.

13. The ink composition according to any one of the preceding claims, which is in the form of a dispersion of particles of at least one pigment in the vehicle of the ink composition.

14. The ink composition according to claim 13, wherein the pigment is a white pigment, such as titanium dioxide.

15. The ink composition according to any one of claims 13 and 14, wherein in said dispersion, 100% of the particles have a size of less than 0.5 µm determined by quasi-elastic light scattering.

16. The ink composition according to any one of the preceding claims, wherein the binder consists solely of one or more biodegradable, and preferably compostable, polymer(s).

17. The ink composition according to any one of claims 1 to 15, wherein the binder, in addition to the at least one biodegradable, and preferably compostable, polymer, in a major proportion by weight relative to the total weight of the binder, further comprises one or more non-biodegradable and non-compostable resin(s) and/or polymer(s).

18. The ink composition according to any one of the preceding claims, wherein the binder represents from 0.1 to 30% by weight of the total weight of the ink composition, preferably from 1 to 25% by weight, more preferably from 3 to 20% by weight of the total weight of the ink composition.

19. The ink composition according to any one of the preceding claims, further comprising at least one conductivity salt, preferably non-ecotoxic, in an amount of at least 0.05% by weight, preferably in an amount of 0.1 to 20%, more preferably from 0.1 to 10%, further preferably from 0.1 to 5% by weight, of the total weight of the ink composition.

20. The ink composition according to any one of the preceding claims which has a conductivity higher than 5 µS/cm at 20°C, preferably higher than or equal to 300 µS/cm at 20°C, more preferably higher than or equal to 500 µS/cm at 20°C.

21. The ink composition according to any one of the preceding claims, further comprising one or more additive(s) chosen from among anti-foaming agents, chemical stabilizers, surfactants, bactericides, fungicides, biocides, and pH-regulating buffers, preferably all these additives are chosen from among biodegradable, and preferably compostable, additives.

22. Method for marking a substrate, object or support by projecting onto said substrate, object or support of an ink by an inkjet printing technique, wherein the projected ink is an ink composition according to any one of claims 1 to 21.

23. The method according to claim 22, wherein the ink jet printing technique is the so-called « drop on demand » technique or the so-called « deflected continuous ink jet » technique.

24. A substrate, object or support, **characterized in that** it is provided with a marking obtained by drying and/or absorption of the ink composition according to any one of claims 1 to 21; preferably the substrate is chosen from among biodegradable and preferably compostable substrates such as disposable packaging, bags, films, beekers, pots, plates, trays, dishes, cutlery, hostess set, clips, food-container bases, and ash-trays.

## Patentansprüche

1. Biologisch abbaubare Tintenzusammensetzung zum Tintenstrahldrucken, die bei Raumtemperatur flüssig ist, umfassend:
a) ein Bindemittel umfassend wenigstens 0,5 Gew.-%, bezogen auf das Gesamtgewicht der Tinte, von wenigstens einem biologisch abbaubaren Polymer mit einem gewichtsgemittelten Molekulargewicht von weniger als 70 kDa, vorzugsweise weniger als 60 kDa, mehr bevorzugt weniger als 50 kDa, noch mehr bevorzugt weniger als 40 kDa, ausgedrückt als Polystyroläquivalente;
b) ein organisches Vehikel oder Lösungsmittel umfassend, vorzugsweise bestehend aus, eine(r) oder mehrere(n) organische(n) Lösungsmittelverbindung(en), und gegebenenfalls Wasser; wobei vorzugsweise das Lösungsmittel oder Vehikel wenigstens 10 Gew.-%, vorzugsweise 30 bis 90 Gew.-%, mehr bevorzugt 60 bis 80 Gew.-% des Gesamtgewichts der Tintenzusammensetzung darstellt;
c) wenigstens 0,1 Gew.-%, bezogen auf das Gesamtgewicht der Tintenzusammensetzung, von einem oder mehreren Farbstoff(en) und/oder Pigment(en);
wobei das biologisch abbaubare Polymer ausgewählt ist aus Polyhydroxyalkanoaten (PHA), Polyesteramiden (PEA), Polyglycolsäuren, Polymilchsäuren (PLA), Polycaprolactonen (PCL), und ihren Copolymeren; und aliphatischen Copolyestern wie Succinaten, Adipaten und Terephthalaten; und wobei die Tintenzusammensetzung eine Viskosität von 1 bis 20 mPa•s, vorzugsweise 2 bis 10 mPa•s bei 20 °C aufweist.

2. Tintenzusammensetzung nach Anspruch 1, wobei das biologisch abbaubare Polymer ein kompostierbares Polymer ist und die Zusammensetzung eine kompostierbare Zusammensetzung ist.

3. Tintenzusammensetzung nach einem der vorangehenden Ansprüche, wobei die Tintenzusammensetzung wenigstens 2 Gew.-%, vorzugsweise wenigstens 4 Gew.-%, mehr bevorzugt wenigstens 6 Gew.-%, bezogen auf das Gesamtgewicht der Tintenzusammensetzung, von dem wenigstens einen biologisch abbaubaren und vorzugsweise kompostierbaren Polymer umfasst.

4. Tintenzusammensetzung nach einem der vorangehenden Ansprüche, wobei die Tintenzusammensetzung 0,5 bis 25 Gew.-%, vorzugsweise 1 bis 20 Gew.-%, mehr bevorzugt 4 bis 15 Gew.-%, noch mehr bevorzugt 6 bis 10 Gew.-%, bezogen auf das Gesamtgewicht der Tintenzusammensetzung, von dem wenigstens einen biologisch abbaubaren und vorzugsweise kompostierbaren Polymer umfasst.

5. Tintenzusammensetzung nach einem der vorangehenden Ansprüche, wobei die Polymilchsäure ausgewählt ist aus amorphen Polymilchsäuren, deren gewichtsgemitteltes Molekulargewicht weniger als 60 kDa, vorzugsweise weniger als 50 kDa, mehr bevorzugt weniger als 40 kDa, ausgedrückt als Polystyroläquivalente, beträgt; und wobei das Polycaprolacton ausgewählt ist aus Polycaprolactonen, deren gewichtsgemitteltes Molekulargewicht weniger als 60 kDa, vorzugsweise weniger als 50 kDa, mehr bevorzugt weniger als 40 kDa, ausgedrückt als Polystyroläquivalente, beträgt.

6. Tintenzusammensetzung nach einem der vorangehenden Ansprüche, wobei die organische(n) Lösungsmittelverbindung(en) des Lösungsmittels aus biologisch abbaubaren und vorzugsweise kompostierbaren Lösungsmittelverbindungen ausgewählt ist/sind.

7. Tintenzusammensetzung nach einem der vorangehenden Ansprüche, wobei die organische(n) Lösungsmittelverbindung(en) aus Ketonen, Alkoholen, Alkylestern, Glycolethern, Acetalen, Ethyllactat, Methyllactat, Ethylacetat und Mischungen davon ausgewählt ist/sind.

8. Tintenzusammensetzung nach Anspruch 7, wobei das Vehikel der Tintenzusammensetzung einen Hauptgewichtsanteil von einem oder mehreren Keton(en) enthält.

9. Tintenzusammensetzung nach einem der vorangehenden Ansprüche, wobei der Farbstoff (die Farbstoffe) und/oder das Pigment (die Pigmente) aus biologisch abbaubaren und vorzugsweise kompostierbaren Farbstoffen und/oder Pigmenten, die keine Schwermetalle enthalten und nicht ökotoxisch sind, ausgewählt ist/sind.

10. Tintenzusammensetzung nach einem der vorangehenden Ansprüche, wobei der Farbstoff (die Farbstoffe) aus in Ketonen löslichen organischen Farbstoffen ausgewählt ist/sind.

11. Tintenzusammensetzung nach einem der vorangehenden Ansprüche, wobei das Pigment (die Pigmente) aus Ruß, Titanoxiden wie Titandioxid und Mischungen davon ausgewählt ist/sind.

12. Tintenzusammensetzung nach einem der vorangehenden Ansprüche, wobei die Gesamtmenge des Farbstoffs (der Farbstoffe) und/oder des Pigments (der Pigmente) 0,05 bis 25 Gew.-%, vorzugsweise 1 bis 20 Gew.-%, mehr bevorzugt 3 bis 10 Gew.-% des Gesamtgewichts der Tintenzusammensetzung beträgt.

13. Tintenzusammensetzung nach einem der vorangehenden Ansprüche, welche in Form einer Dispersion von Teilchen von wenigstens einem Pigment in dem Vehikel der Tintenzusammensetzung vorliegt.

14. Tintenzusammensetzung nach Anspruch 13, wobei das Pigment ein weißes Pigment, wie etwa Titandioxid, ist.

15. Tintenzusammensetzung nach einem der Ansprüche 13 und 14, wobei in der Dispersion 100 % der Teilchen eine Größe von weniger als 0,5 µm, bestimmt durch quasi-elastische Lichtstreuung, aufweisen.

16. Tintenzusammensetzung nach einem der vorangehenden Ansprüche, wobei das Bindemittel ausschließlich aus einem oder mehreren biologisch abbaubaren und vorzugsweise kompostierbaren Polymer(en) besteht.

17. Tintenzusammensetzung nach einem der Ansprüche 1 bis 15, wobei das Bindemittel, zusätzlich zu dem wenigstens einen biologisch abbaubaren und vorzugsweise kompostierbaren Polymer, in einem Hauptgewichtsanteil, bezogen auf das Gesamtgewicht des Bindemittels, außerdem ein oder mehrere nicht biologisch abbaubare(s) und nicht kompostierbare(s) Harz(e) und/oder Polymer(e) umfasst.

18. Tintenzusammensetzung nach einem der vorangehenden Ansprüche, wobei das Bindemittel 0,1 bis 30 Gew.-% des Gesamtgewichts der Tintenzusammensetzung, vorzugsweise 1 bis 25 Gew.-%, mehr bevorzugt 3 bis 20 Gew.-% des Gesamtgewichts der Tintenzusammensetzung darstellt.

19. Tintenzusammensetzung nach einem der vorangehenden Ansprüche, außerdem umfassend wenigstens ein Leitfähigkeitssalz, das vorzugsweise nicht ökotoxisch ist, in einer Menge von wenigstens 0,05 Gew.-%, vorzugsweise in einer Menge von 0,1 bis 20 Gew.-%, mehr bevorzugt von 0,1 bis 10 Gew.-%, noch mehr bevorzugt von 0,1 bis 5 Gew.-% des Gesamtgewichts der Tintenzusammensetzung.

20. Tintenzusammensetzung nach einem der vorangehenden Ansprüche, welche eine Leitfähigkeit von höher als 5 µS/cm bei 20 °C, vorzugsweise höher als oder gleich 300 µS/cm bei 20 °C, mehr bevorzugt höher als oder gleich 500 µS/cm bei 20 °C aufweist.

21. Tintenzusammensetzung nach einem der vorangehenden Ansprüche, außerdem umfassend ein oder mehrere Additiv(e) ausgewählt aus Antischaummitteln, chemischen Stabilisatoren, oberflächenaktiven Stoffen, Bakteriziden, Fungiziden, Bioziden und pH-regelnden Puffern, wobei vorzugsweise alle diese Additive aus biologisch abbaubaren und vorzugsweise kompostierbaren Additiven ausgewählt sind.

22. Verfahren zum Markieren eines Substrats, Objekts oder Trägermaterials durch Aufsprühen einer Tinte auf das Substrat, Objekt oder Trägermaterial durch ein Tintenstrahldruckverfahren, wobei die aufgesprühte Tinte eine Tintenzusammensetzung nach einem der Ansprüche 1 bis 21 ist.

23. Verfahren nach Anspruch 22, wobei das Tintenstrahldruckverfahren das sogenannte Drop-on-Demand-Verfahren oder das sogenannte Deflected-Continuous-Ink-Jet-Verfahren ist.

24. Substrat, Objekt oder Trägermaterial, **dadurch gekennzeichnet, dass** es mit einer Markierung versehen ist, die durch Trocknen und/oder Absorption der Tintenzusammensetzung nach einem der Ansprüche 1 bis 21 erhalten wird; wobei das Substrat vorzugsweise ausgewählt ist aus biologisch abbaubaren und vorzugsweise kompostierbaren Substraten wie einer Wegwerfverpackung, Tüten, Folien, Bechern, Töpfen, Tellern, Tabletts bzw. Schalen, Geschirr, Schneidwaren bzw. Besteck, Servierbesteck, Klammern bzw. Spangen, Lebensmittelbehälter-Unterteilen und Aschenbechern.

## Revendications

1. Composition d'encre biodégradable pour l'impression par jet d'encre, liquide à la température ambiante, comprenant :
a) un liant comprenant au moins 0,5% en poids, par rapport au poids total de l'encre, d'au moins un polymère biodégradable de masse moléculaire moyenne en poids inférieure à 70 kDa, de préférence inférieure à 60 kDa, de préférence encore inférieure à 50 kDa, mieux inférieure à 40 kDa, exprimée en équivalents polystyrène ;
b) un véhicule ou solvant organique comprenant, de préférence constitué par, un ou plusieurs composé(s) solvant(s) organique(s), et éventuellement de l'eau; de préférence ledit solvant ou véhicule représente au moins 10% en poids, de préférence de 30 à 90% en poids, de préférence encore de 60 à 80% en poids, du poids total de la composition d'encre ;
c) au moins 0,1% en poids par rapport au poids total de la composition d'encre d'un ou plusieurs colorant(s) et/ou pigment(s) ;
dans laquelle le polymère biodégradable est choisi parmi les polyhydroxyalcanoates (PHA), les polyesteramides (PEA), les poly (acide glycolique)s, les poly (acide lactique)s (PLA), les polycaprolactones (PCL), et leurs copolymères ; et les copolyesters aliphatiques tels que les succinates, adipates, et téréphtalates ; et dans laquelle la composition d'encre a une viscosité de 1 à 20 mPa.s, de préférence de 2 à 10 mPa.s à 20°C.

2. Composition d'encre selon la revendication 1, dans laquelle ledit polymère biodégradable est un polymère compostable et la composition est une composition compostable.

3. Composition d'encre selon l'une quelconque des revendications précédentes, dans laquelle la composition d'encre comprend au moins au moins 2% en poids, de préférence au moins 4% en poids, de préférence encore au moins 6% en poids, par rapport au poids total de l'encre, dudit au moins un polymère biodégradable et de préférence compostable.

4. Composition d'encre selon l'une quelconque des revendications précédentes, dans laquelle la composition d'encre comprend de 0,5 à 25% en poids, de préférence de 1 à 20% en poids, de préférence encore de 4 à 15% en poids, mieux de 6 à 10% en poids par rapport au poids total de l'encre, dudit au moins un polymère biodégradable et de préférence compostable.

5. Composition d'encre selon l'une quelconque des revendications précédentes, dans laquelle ledit poly(acide lactique) est choisi parmi les poly(acide lactique)s amorphes dont la masse moléculaire moyenne en poids est inférieure à 60 kDa, de préférence inférieure à 50 kDa, de préférence encore inférieure à 40 kDa, exprimée en équivalents polystyrène ; et dans laquelle ledit polycaprolactone est choisi parmi les polycaprolactones dont la masse moléculaire moyenne en poids est inférieure à 60 kDa, de préférence inférieure à 50 kDa, de préférence encore inférieure à 40 kDa, exprimée en équivalents polystyrène.

6. Composition d'encre selon l'une quelconque des revendications précédentes, dans laquelle le ou lesdits composé(s) solvant(s) organique(s) du solvant est (sont) choisi(s), parmi les composés solvants biodégradables et de préférence compostables.

7. Composition d'encre selon l'une quelconque de revendications précédentes, dans laquelle le ou lesdits solvant(s) organique(s) est(sont) choisi(s) parmi les cétones, les alcools, les esters d'alkyle, les éthers de glycol, les acétals, le lactate d'éthyle, le lactate de méthyle, l'acétate d'éthyle, et leurs mélanges.

8. Composition d'encre selon la revendication 7, dans laquelle le véhicule de la composition d'encre contient une proportion majoritaire en poids d'une ou plusieurs cétone(s).

9. Composition d'encre selon l'une quelconque des revendications précédentes, dans laquelle le(s) colorant(s) et/ou pigment(s) est(sont) choisi(s) parmi les colorants et/ou pigments biodégradables et de préférence compostables, ne contenant pas de métaux lourds, et non écotoxiques.

10. Composition d'encre selon l'une quelconque des revendications précédentes, dans laquelle le ou les colorant(s) est (sont) choisi(s) parmi les colorants organiques solubles dans les cétones.

11. Composition d'encre selon l'une quelconque des revendications précédentes, dans laquelle le ou les pigment(s) est(sont) choisi(s) parmi le noir de carbone, les oxydes de titane tels que le dioxyde de titane, et leurs mélanges.

12. Composition d'encre selon l'une quelconque des revendications précédentes, dans laquelle la quantité totale de colorant(s) et/ou de pigment(s) est de 0,05 à 25% en poids, de préférence, de 1 à 20% en poids, de préférence encore de 3 à 10% en poids, du poids total de la composition.

13. Composition d'encre selon l'une quelconque des revendications précédentes, qui se présente sous la forme d'une dispersion de particules d'au moins un pigment dans le véhicule de la composition d'encre.

14. Composition d'encre selon la revendication 13, dans laquelle le pigment est un pigment blanc, tel que le dioxyde de titane.

15. Composition d'encre selon l'une quelconque des revendications 13 et 14, dans laquelle dans ladite dispersion 100% des particules ont une taille inférieure à 0,5 µm déterminée par diffusion quasi-élastique de la lumière.

16. Composition d'encre selon l'une quelconque des revendications précédentes, dans laquelle le liant est constitué uniquement d'un ou plusieurs polymère(s) biodégradable(s) et de préférence compostable(s).

17. Composition d'encre selon l'une quelconque des revendications 1 à 15, dans laquelle le liant comprend, outre le au moins un polymère biodégradable et compostable dans une proportion majoritaire en poids par rapport au poids total du liant, une ou plusieurs résine(s) et/ou polymère(s) non biodégradable(s) et non compostable(s).

18. Composition d'encre selon l'une quelconque des revendications précédentes, dans laquelle le liant représente de 0,1 à 30% en poids, du poids total de la composition d'encre, de préférence de 1 à 25% en poids, de préférence encore de 3 à 20% en poids, du poids total de la composition d'encre.

19. Composition d'encre selon l'une quelconque des revendications précédentes, comprenant, en outre, au moins un sel de conductivité de préférence non écotoxique, en une quantité d'au moins 0,05% en poids, de préférence en une quantité de 0,1 à 20%, de préférence encore de 0,1 à 10% en poids, mieux de 0,1 à 5% en poids, du poids total de la composition d'encre.

20. Composition d'encre selon l'une quelconque des revendications précédentes, qui a une conductivité supérieure à 5 µS/cm à 20°C, de préférence supérieure ou égale à 300 µS/cm à 20°C, de préférence encore supérieure ou égale à 500 µS/cm à 20°C.

21. Composition d'encre selon l'une quelconque des revendications précédentes, comprenant, en outre un ou plusieurs additif(s) choisi(s) parmi les agents anti-mousse, les stabilisants chimiques, les agents tensio-actifs, les bactéricides, fongicides, biocides, et les tampons régulateurs de pH, de préférence tous ces additifs sont choisis parmi les additifs biodégradables, et de préférence compostables.

22. Procédé de marquage d'un substrat, objet ou support par projection sur ce substrat, objet ou support d'une encre par une technique d'impression par jet d'encre, dans lequel l'encre projetée est une composition d'encre selon l'une quelconque des revendications 1 à 21.

23. Procédé selon la revendication 22, dans lequel la technique d'impression par jet d'encre est la technique dite de la « goutte à la demande », ou la technique dite du « jet d'encre continu dévié ».

24. Substrat, objet ou support **caractérisé en ce qu'**il est pourvu d'un marquage obtenu par séchage et/ou absorption de la composition d'encre selon l'une quelconque des revendications 1 à 21 ; de préférence le substrat est choisi parmi les substrats biodégradables et de préférence compostables tels que les emballages jetables, les sacs, les films, les gobelets, les pots, les plats, les plateaux, les raviers, les barquettes, les couverts, les clips, les semelles, et les cendriers.
